# FASCICULE DE BREVET EUROPEEN

(11) **EP 3 005 534 B1**
(45) Date de publication et mention de la délivrance du brevet: **22.03.2017**
(21) Numéro de dépôt: 14733264.7
(22) Date de dépôt: 05.06.2014
(51) Int. Cl.: H02K 3/52, H02K 5/22, H02K 5/24, H02K 11/25

(54) **MACHINE ELECTRIQUE MUNIE D'UN AMORTISSEUR POUR RESISTER MECANIQUEMENT AUX SOLLICITATIONS VIBRATOIRES ET AMORTISSEUR CORRESPONDANT**
ELEKTRISCHE MASCHINE MIT EINEM DÄMPFER FÜR MECHANISCHEN WIDERSTAND GEGEN SCHWINGUNGSBELASTUNG UND ENTSPRECHENDER DÄMPFER
ELECTRICAL MACHINE PROVIDED WITH A DAMPER FOR MECHANICALLY RESISTING VIBRATORY STRESSES, AND CORRESPONDING DAMPER

(30) Priorité: 05.06.2013 FR 1355147
(43) Date de publication de la demande: 13.04.2016
(73) Titulaire: Valeo Equipements Electriques Moteur, 94046 Créteil Cedex (FR)
(72) Inventeur: LE DOUARIN, Michel, F-92330 Sceaux (FR); SELOSSE, Didier, F-62520 Le Touquet (FR); HANQUEZ, Michaël, F-94000 Creteil (FR); GERVAIS, Hugues, F-77186 Noisiel (FR); JUGOVIC, Svetislav, F-91260 Juvisy-sur-Orge (FR); PALLESCHI, Frédéric, F-94320 Thiais (FR); ALAPETITE, Mathieu, F-75014 Paris (FR)
(74) Mandataire: Tran, Chi-Hai
(86) Numéro de dépôt international: PCT/FR2014/051337
(87) Numéro de publication internationale: WO 2014/195642

(56) Documents cités:
- EP-A2- 1 184 957
- WO-A2-2010/136966
- WO-A2-2013/045986
- US-B2- 6 538 350

## Description

### DOMAINE TECHNIQUE DE L'INVENTION

L'invention porte sur une machine électrique munie d'un amortisseur lui permettant de résister mécaniquement aux sollicitations vibratoires, ainsi que sur l'amortisseur correspondant.

L'invention se rapporte au domaine des machines électriques telles que les moteurs, les alternateurs, ou les alterno-démarreurs.

L'invention trouve une application particulièrement avantageuse avec les alternateurs utilisés dans des systèmes dits "range-extender" destinés à augmenter l'autonomie des véhicules électriques. Ces systèmes comportent à cet effet un moteur thermique de faible puissance entraînant mécaniquement en rotation l'alternateur destiné à fournir, quand cela est nécessaire, de l'énergie électrique à des batteries d'alimentation d'un moteur électrique de traction du véhicule.

### ARRIERE PLAN TECHNOLOGIQUE DE L'INVENTION

On connaît des machines électriques comportant un stator et un rotor solidaire d'un arbre. Le rotor pourra être solidaire d'un arbre menant et/ou menée et pourra appartenir à une machine électrique tournante sous la forme d'un alternateur comme décrit dans le document EP0803962 ou d'un moteur électrique comme décrit dans le document EP0831580.

La machine électrique comporte un boîtier portant le stator. Ce boîtier est configuré pour porter à rotation l'arbre par exemple par l'intermédiaire de roulements, tel que des roulements à billes et/ou à aiguilles. Le rotor pourra comporter un corps réalisé en tôle feuilletée, qui comporte des logements. Des aimants permanents sont positionnés à l'intérieur d'au moins certains de ces logements comme visible par exemple dans les figures 1 et 2 du document EP0803962.

Comme décrit dans le document FR2890798 auquel on se reportera pour plus de précisions, la machine comporte un rotor et un corps de stator sous la forme d'un paquet de tôles doté de dents pour le montage de bobines appartenant au bobinage du stator. Le corps du stator comporte des encoches ouvertes vers l'intérieur délimitées chacune par deux dents consécutives. Ces dents sont à bords parallèles, une bande de matière, appelée culasse existant entre le fond des encoches et la périphérie externe du corps. Dans ce document la machine électrique est polyphasée et comporte un bobinage de stator comportant plusieurs bobines préformées. Plus précisément, on monte sur les dents du corps du stator les bobines préformées réalisées à partir d'un fil enroulé sur plusieurs tours. Les fils consistent par exemple en un fil de cuivre revêtu d'émail.

A cet effet, chaque bobine est montée autour d'un isolant d'encoche électriquement isolant comportant des rebords définissant une gorge de montage de la bobine. Dans une forme de réalisation, deux bobines sont implantées dans une même encoche.

Les bobines sont interconnectées entre elles à l'aide d'un interconnecteur compact pour former les différentes phases de la machine. A cette fin, l'interconnecteur en appui contre le stator comporte plusieurs cadres annulaires, dont un relié au neutre de la machine, munis chacun d'une pluralité de languettes auxquelles sont soudées les extrémités des fils de bobine. Toutefois, ces languettes sont susceptibles d'être d'endommagées suite aux sollicitations vibratoires subies par la machine du fait des jeux d'assemblage dans la chaîne de côtes.

Pour remédier à cet inconvénient le document EP1184957 décrit un amortisseur monté compressé entre un interconnecteur et un support de l'interconnecteur monté sur un corps de stator.

### OBJET DE L'INVENTION

L'invention vise à remédier au problème de l'endommagement des languettes en proposant une machine électrique tournante comportant un stator muni de dents autour desquelles sont enroulées un ensemble de bobines, un interconnecteur annulaire en appui sur un paquet de tôles du stator muni de languettes auxquelles sont soudées des extrémités des bobines pour formation de phases de la machine électrique, un flasque de fermeture d'un boîtier contenant le stator, et au moins un amortisseur réalisé dans un matériau déformable caractérisée en ce que ledit amortisseur est destiné à être monté compressé entre l'interconnecteur et le flasque de fermeture de la machine.

Ainsi, l'amortisseur déformable coincé entre l'interconnecteur et le flasque de fermeture permet de rattraper les jeux d'assemblage entre les éléments de la machine, en sorte que les mouvements relatifs des pièces les unes par rapport aux autres sont limités en cas de sollicitations vibratoires. L'invention permet ainsi de préserver les languettes de soudure de l'interconnecteur de tout endommagement éventuel.

Selon une réalisation, l'amortisseur de forme annulaire s'étend sur toute une circonférence de l'interconnecteur.

Selon une réalisation, la machine comporte une pluralité d'amortisseurs s'étendant chacun sur une portion d'une circonférence de l'interconnecteur. Selon une réalisation, chaque amortisseur s'étend circonférentiellement entre deux pieds d'appui de l'interconnecteur.

Selon une réalisation, l'amortisseur est configuré pour venir en appui contre des nervures radiales ménagées dans le flasque de fermeture.

Selon une réalisation, le flasque de fermeture comportant une alternance de nervures de faible épaisseur et de grande épaisseur, l'amortisseur comporte des plots destinés à venir en appui contre les nervures de grande épaisseur. Selon une réalisation, l'amortisseur comporte en outre des plots destinés à venir en appui contre un fond du flasque de fermeture s'étendant entre les nervures.

Selon une réalisation, afin d'augmenter une surface de contact entre l'amortisseur et le flasque de fermeture, ledit flasque de fermeture comporte en outre au moins une zone d'appui comblant des espaces de séparation entre des nervures du flasque de fermeture.

Selon une réalisation, un niveau de compression de l'amortisseur dépend d'un état d'usinage du flasque de fermeture.

Selon une réalisation, l'amortisseur comporte au moins un rebord latéral s'étendant axialement sur au moins une portion d'une périphérie interne et/ou externe dudit amortisseur apte à assurer un maintien radial dudit amortisseur par rapport à l'interconnecteur.

Selon une réalisation, l'amortisseur comporte des moyens de maintien par encliquetage sur l'interconnecteur.

Selon une réalisation, l'amortisseur comporte un dispositif d'indexage angulaire dudit amortisseur par rapport à l'interconnecteur.

Selon une réalisation, l'amortisseur intègre un système de guidage apte à assurer un guidage d'un fil reliant une sonde de température implantée sur le stator à un connecteur déporté de la sonde.

L'invention a également pour objet un amortisseur réalisé dans un matériau déformable configuré pour être monté compressé entre un interconnecteur et un flasque de fermeture d'une machine électrique tournante.

Selon une réalisation, l'amortisseur présente une forme annulaire et comporte des plots espacés angulairement entre eux de manière régulière destinés à venir en appui contre des nervures radiales ménagées dans le flasque de fermeture.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
Les figures 1a et 1b montrent respectivement des vues en perspective d'une partie d'un stator seul et d'un stator bobiné appartenant à la machine électrique selon l'invention ;
La figure 2 montre, suivant une vue en perspective, un isolant de bobine destiné à être monté sur les dents du stator de la figure 1 b;
La figure 3a montre une vue en perspective de l'interconnecteur utilisé avec la machine électrique selon l'invention;
La figure 3b représente une vue en perspective d'un cadre de phase de l'interconnecteur de la figure 3a;
La figure 3c est une vue en coupe transversale de l'interconnecteur de la figure 3a;
La figure 4a montre une vue en perspective du stator bobiné de la figure 1 b monté à l'intérieur du boîtier de la machine électrique munie d'un amortisseur selon l'invention;
La figure 4b représente une vue détaillée du système de guidage d'un fil d'une sonde de température intégré à l'amortisseur de la figure 4a;
La figure 5 montre une vue en perspective éclatée du boîtier, du stator bobiné de la figure 1b, de l'amortisseur selon l'invention et d'un flasque de fermeture fermant le boîtier de la machine électrique selon l'invention;
Les figures 6a-6f et 7a-7f montrent respectivement des variantes de réalisation de l'amortisseur selon l'invention et du flasque de fermeture du boîtier de la machine électrique correspondant.

Les éléments identiques, similaires ou analogues conservent la même référence d'une figure à l'autre.

### DESCRIPTION D'EXEMPLES DE REALISATION DE L'INVENTION

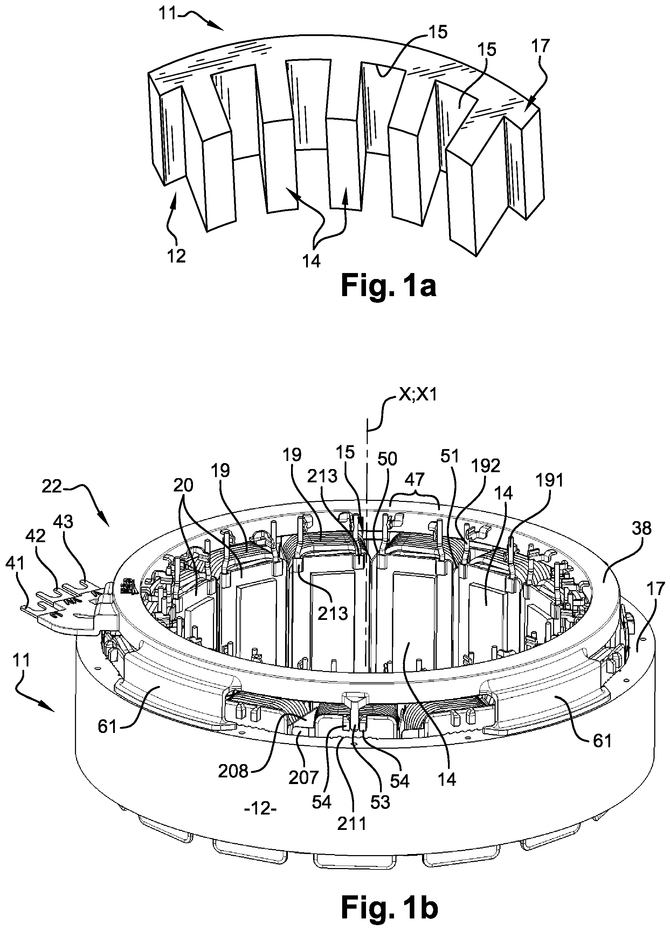

Les figures 1a et 1b montrent un stator 11 d'axe X ayant un corps 12 comportant des dents 14 réparties régulièrement sur la périphérie interne ainsi que des encoches 15 ouvertes vers l'intérieur, deux encoches 15 consécutives étant séparées par une dent 14. Ces dents 14 sont à bords parallèles deux à deux, une bande de matière, correspondant à la culasse 17 existant entre le fond des encoches 15 et la périphérie externe du corps 12. Le corps 12 est formé par un empilement de tôles réalisées en matière ferromagnétique s'étendant dans un plan radial perpendiculaire à l'axe X. Le paquet de tôles est maintenu au moyen de rivets (non représentés) traversant axialement de part en part l'empilement des tôles, ou par collage.

Le stator 11 appartient à une machine électrique tournante polyphasée comportant un bobinage de stator doté de plusieurs bobines 19, ici préformées, et d'un point neutre, dit neutre de la machine, visible par exemple à la figure 1 du document EP0831580. Les bobines 19 sont interconnectées entre elles à l'aide d'un interconnecteur 22 compact comportant plusieurs cadres 31-34 dont l'un 31, dit cadre de neutre 31 est relié au neutre de la machine électrique tournante.

Plus précisément, comme cela est visible sur la figure 1b, on monte sur les dents 14 du stator les bobines 19 préformées formant le bobinage du stator 11. Ces bobines 19 sont réalisées à partir d'un fil enroulé sur plusieurs tours. Les fils consistent en un fil électriquement conducteur, par exemple en un fil de cuivre et/ou d'aluminium, revêtu d'un isolant électrique, tel que de l'émail. Les fils peuvent être de section circulaire, rectangulaire ou en forme de méplat. Dans une forme de réalisation, deux bobines 19 sont implantées dans une même encoche 15, chaque bobine 19 étant enroulée autour de l'une des dents 14 métallique délimitant l'encoche par l'intermédiaire d'un isolant de bobine 20.

Les extrémités 191, 192 de chaque bobine 19 dépassent axialement du bobinage d'un même côté du stator 11 correspondant sur la figure 1b au côté supérieur du stator 11. Chaque bobine 19 comporte une première extrémité 191 appelée "entrée" destinée à être connectée avec les autres entrées de manière alternée pour appartenir à une des phases U, V, W de la machine et une deuxième extrémité 192 appelée "sortie" destinée à être reliée au neutre de la machine électrique. Les bobines 19 sont ainsi interconnectées entre elles pour former les différentes phases U, V, W à l'aide de l'interconnecteur 22 d'axe X1 confondu avec l'axe X lorsque l'interconnecteur 22 est installé sur le stator 11. Cet interconnecteur 22 est monté en appui sur le paquet de tôles du stator 11.

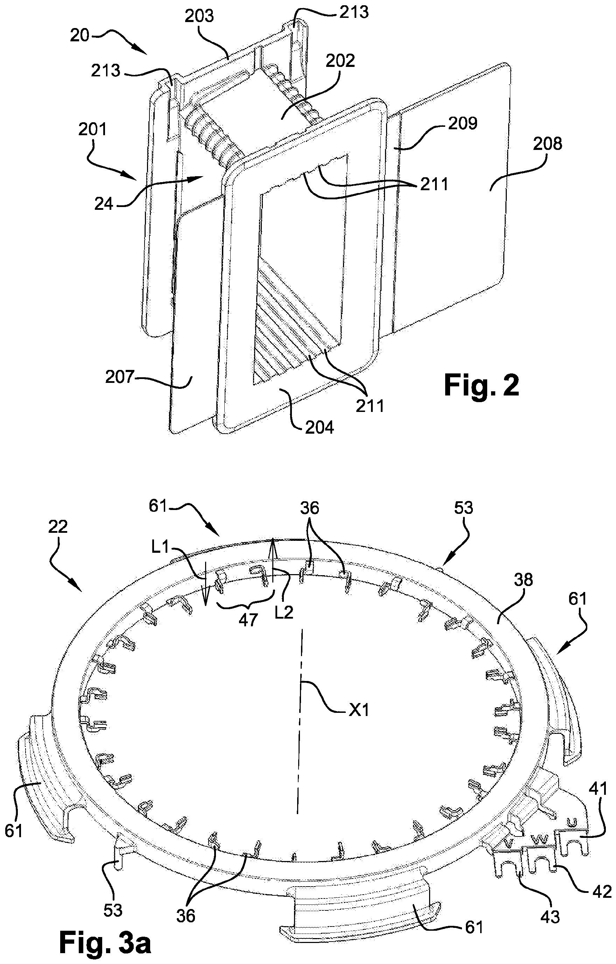

Plus précisément, l'isolant 20 de bobine est réalisé en matière électriquement isolante et moulable par exemple en matière plastique telle que du PA 6.6, qui pourra être renforcé par des fibres, telles que des fibres de verre. Comme montré sur la figure 2, l'isolant de bobine 20 comporte un corps 201 formé par un cadre 202 ainsi qu'un rebord avant 203 et un rebord arrière 204 définissant avec les parois du cadre 202 une gorge de montage de la bobine 19. Le rebord arrière 204, destiné à être positionné du côté de la culasse 17, est prolongé d'un côté par un talon 207; et de l'autre par une ailette 208 destinée à être rabattue vers un côté de la bobine via une zone de pliage 209. Le talon 207 est moins épais et moins large que l'ailette 208. Le talon 207 permet d'augmenter l'isolation électrique entre la culasse 17 et la bobine 19 concernée. Dans d'autres modes de réalisation, l'ailette 208 pourra être maintenue en position contre le côté de la bobine au moyen d'un système d'encliquetage de l'ailette 208 sur le rebord opposé à celui dont elle est issue.

L'isolant 20 de bobine comporte en outre des rainures 211 ménagées dans les faces internes des parois supérieure et inférieure du cadre 24. De préférence, les bordures longitudinales du rebord avant 203 sont configurées à une de leurs extrémités 213 pour servir de guide fil pour chaque extrémité 191, 192 de la bobine 19.

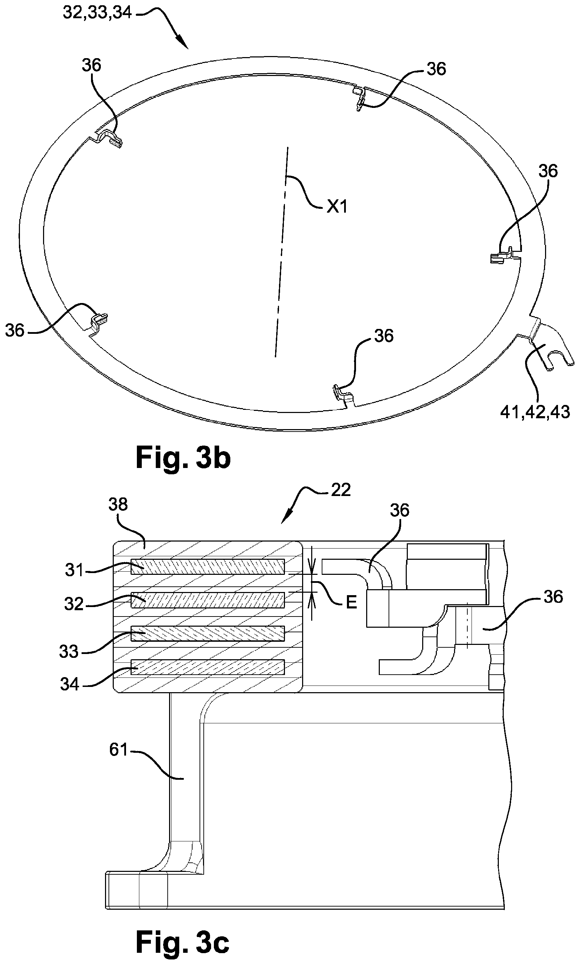

Par ailleurs, l'interconnecteur 22 montré sur les figures 3a à 3c comporte quatre cadres 31-34 de forme annulaire s'étendant suivant un plan radial. Les cadres 31-34 sont électriquement conducteurs en étant par exemple en cuivre ou avantageusement en un autre matériau métallique soudable et conducteur électrique. Le diamètre externe des cadres 31-34, correspondant sensiblement au diamètre externe de l'interconnecteur 22, est inférieur au diamètre externe du stator 11, constitué par le diamètre externe de la culasse 17, pour faciliter une opération d'imprégnation des bobines 19 et réduction de l'encombrement diamétral. Ces cadres 31-34 sont empilés axialement les uns sur les autres et isolés électriquement entre eux (cf. figure 3c). Comme cela est bien visible sur les figures 3a et 3b, chaque cadre 31-34 porte sur sa périphérie interne des languettes 36 apparentes s'étendant en saillie radiale vers l'intérieur du cadre pour le soudage des extrémités 191, 192 des bobines du stator. De préférence, les cadres 31-34 sont noyés dans un corps 38 réalisé en matériau électriquement isolant, tel que de la matière plastique. Une couche de matière électriquement isolante 38 d'épaisseur E est présente entre chaque cadre comme visible à la figure 3c.

Un des cadres 31, dit cadre neutre, est destiné à être relié au neutre du bobinage de la machine électrique comprenant les bobines 19 agencées ici selon un montage en étoile avec un point neutre constitué à la faveur du cadre 31. Ce cadre de neutre 31 est situé à une extrémité de l'empilement des cadres 31-34, ici à l'extrémité la plus éloignée de la culasse 17. Etant donné que chaque bobine 19 a une extrémité de sortie 192 reliée au neutre, le cadre 31 de neutre comporte un nombre de languettes 36 égal au nombre de bobines 19, en l'occurrence égal à 15.

Les trois autre cadres 32-34, dit cadres de phase, sont destinés à être reliés chacun aux entrées 191 des bobines 19 de la phase U, V, W concernée la machine électrique, ici de type triphasée. Les extrémités d'entrée 191 des bobines 19 sont ainsi alternativement reliées circonférentiellement aux sorties de phase du bobinage de la machine électrique par l'intermédiaire d'un des cadres 32-34 de phase de l'interconnecteur 22. Chaque phase comporte cinq bobines 19 reliées électriquement entre elles par l'un des cadres 32-34, dont le nombre de languettes 36 est égal à cinq (cf. figure 3b).

En outre, comme montré sur les figures 1b, 3a, 3b, chaque cadre 32-34 de phase comporte sur sa périphérie externe un terminal 41-43 de connexion pour l'interconnexion avec un connecteur de puissance (non représenté) lui-même relié à un onduleur décrit par exemple dans le document EP0831580. On appréciera que les terminaux 41-43 sont simplifiés par rapport aux terminaux décrits dans le document US 2005/0253466 du fait qu'ils font partie des cadres 32-34. Ces terminaux 41-43 sont rigides et d'un encombrement réduit.

En outre, pour avoir suffisamment de place pour pincer une languette 36 et une extrémité 191, 192 d'une bobine 19 à l'aide d'une électrode de soudage, un ensemble 47, formé par une languette 36 d'un des cadres de phase 32-34 et une languette 36 du cadre de neutre 31 destinées à être soudées sur les extrémités 191, 192 d'une même bobine 19, est configuré de manière à être positionné entre les côtés 50, 51 de ladite bobine 19 s'étendant entre les extrémités axiales de la bobine 19 (cf. figures 1b et 3a). Les languettes 36 de l'ensemble 47 sont en contact avec les zones en vis-à-vis des extrémités 191, 192, comme mieux visible à la figure 1 b.

Par ailleurs, comme on le voit sur la figure 3a, le cadre de neutre 31 étant situé à une extrémité de l'empilement des cadres 31-34, les languettes 36 du cadre de neutre 31 sont dirigées, suivant une direction axiale, dans un sens inverse L1 par rapport à la direction L2 des languettes 36 des cadres de phase 32-34, de sorte que toutes les languettes 36 de l'interconnecteur 22 se situe à la même hauteur que les extrémités 191, 192 de bobine. Une telle configuration qui limite la distance entre les languettes 36 de l'interconnecteur 22 et les extrémités des bobines 19 permet de réduire la longueur des fils du bobinage et la hauteur totale de l'empilage de l'interconnecteur constitué des cadres 31-34 et de leur surmoulage respectif.

Comme montré sur les figures 1b et 3a, l'interconnecteur 22 comporte des pions 53 permettant, lors du montage, l'indexage de l'interconnecteur 22 par rapport aux bobines 19 afin de réduire les risques de mauvaises connexions entre les bobines. Ces pions d'indexage 53 d'extension axiale sont portés par une périphérie externe de l'interconnecteur 22. Ces pions d'indexage 53 sont destinés à coopérer avec des protubérances 54 sur les isolants de bobine définissant un passage pour un pion d'indexage 53.

L'interconnecteur 22 comporte également des pieds d'appui 61 destinés à reposer sur un rebord de la culasse 17 du stator 11. Les pieds d'appui 61 sont ici au nombre de quatre répartis de manière régulière autour du corps 38. Deux pieds d'appui 61 successifs sont ainsi écartés angulairement d'un angle de l'ordre de 90 degrés. Les pieds d'appui 61 permettent de maintenir le corps 38 du connecteur 22 au-dessus des bobines 19 sans que le corps 38 soit en contact avec les bobines 19. En outre, l'encombrement circonférentiel des pieds 19 est suffisamment faible pour éviter que l'interconnecteur 22 recouvre entièrement la périphérie externe des bobines 19, ce qui facilite l'imprégnation lors de la fabrication puis le refroidissement du stator 11 lors de son utilisation du fait de la grande zone de dégagement entre deux pieds d'appui 61 successifs et de l'espace entre le corps 38 de l'interconnecteur 22 et les bobines 19.

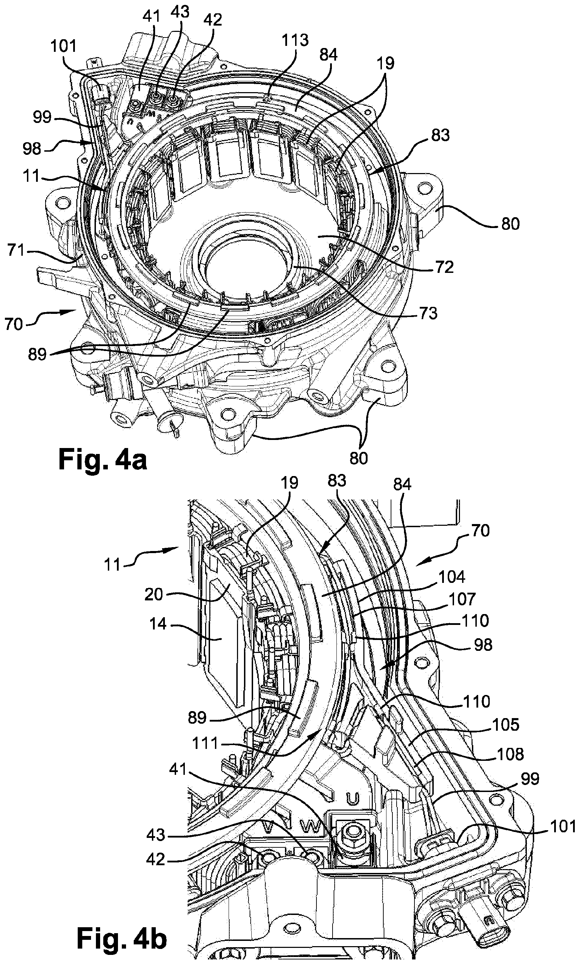

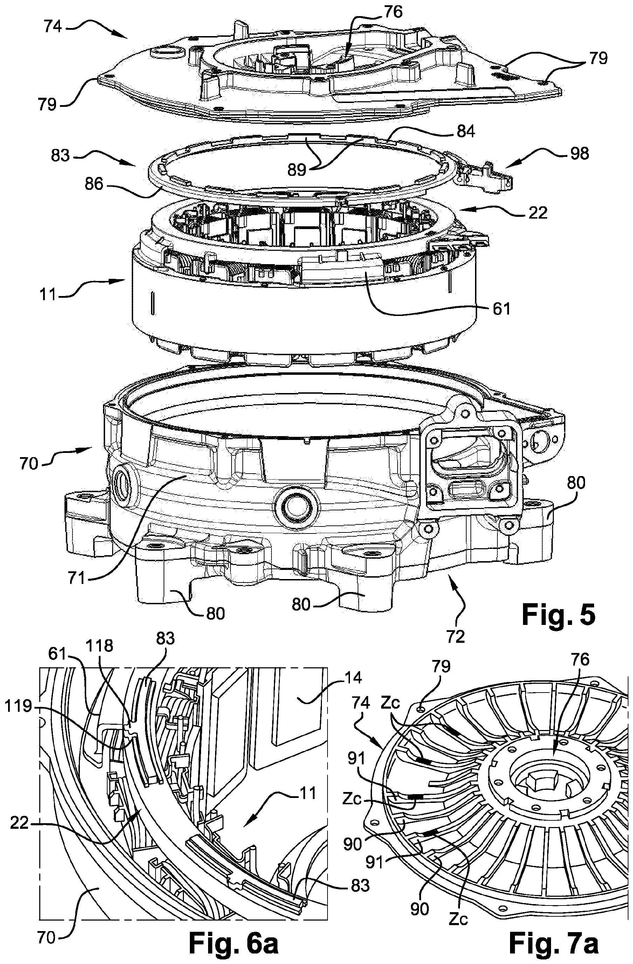

De préférence, l'ensemble formé par le stator 11 et l'interconnecteur 22 est monté par frettage à l'intérieur d'un boîtier 70 visible sur les figures 4a, 4b et 5. Ce boîtier 70 comporte une partie annulaire 71 d'orientation axiale s'étendant depuis une périphérie externe d'un fond 72 d'orientation sensiblement radial muni en son centre d'un palier 73 pour le montage à rotation d'une extrémité de l'arbre du rotor. Ce boîtier 70 pourra par exemple être refroidi par eau. Le boîtier 70 est destiné à être fermé par un flasque de fermeture 74 montré sur la figure 5 muni en son centre d'un palier 76 pour le montage à rotation de l'autre extrémité de l'arbre du rotor.

Lors du montage de la machine électrique, le rotor est assemblé avec le flasque de fermeture 74 avant la fixation dudit flasque 74 au boîtier 70. A cet effet, on utilise des vis (non représentées) traversant des ouvertures ménagées dans des oreilles 79 situées à la périphérie du flasque 74 pour insertion dans des trous taraudés ménagés dans des oreilles 80 du boîtier 70 situées en regard des oreilles 79 du flasque 74.

Au moins un amortisseur 83 réalisé dans un matériau déformable est monté compressé entre l'interconnecteur 22 et le flasque de fermeture 74. Un tel amortisseur 83 permet de limiter les mouvements relatifs des pièces les unes par rapport aux autres en cas de sollicitations vibratoires, afin de préserver les languettes 36 de soudure de l'interconnecteur 22 d'un endommagement éventuel.

Dans le mode de réalisation des figures 4a, 4b et 5, l'amortisseur 83 de forme annulaire s'étend sur l'ensemble de la circonférence de l'interconnecteur 22. Plus précisément, l'amortisseur 83 comporte un corps 84 de forme annulaire d'orientation sensiblement radiale ayant un rebord 86 visible à la figure 5 s'étendant axialement sur une portion de la périphérie externe du corps 84. Ce rebord 86 assure un maintien radial de l'amortisseur 83 lorsque le corps 84 est plaqué via sa face interne contre l'interconnecteur 22 et que ledit rebord 86 est plaqué contre une face annulaire d'orientation radiale de la périphérie externe de l'interconnecteur.

Une face externe de l'amortisseur 83 tournée vers l'extérieur du stator 11 comporte des plots 89 destinés à venir en appui contre des nervures radiales 90, 91 ménagées dans la face interne du flasque 74 tournée vers l'intérieur du stator 11. Ces nervures radiales 90, 91 bien visibles sur la figure 7a notamment assurent une rigidification du flasque de fermeture 74.

En l'occurrence, le flasque de fermeture 74 comporte une alternance de nervures de faible épaisseur 90 et de grande épaisseur 91, l'épaisseur d'une nervure 90, 91 étant mesurée axialement par rapport au fond du flasque de fermeture 74. Les plots 89 sont destinés à venir en appui contre une nervure sur deux du flasque de fermeture 74. Dans ce mode de réalisation, les plots 89 viennent en appui contre les nervures 91 de plus grande épaisseur, c'est-à-dire celles qui sont les plus saillantes par rapport au fond du flasque de fermeture 74.

Les plots 89 de forme globalement parallélépipédique sont ici situés au niveau de la périphérie interne du corps 84 de l'amortisseur 83. Chaque plot 89 s'étend circonférentiellement suivant une portion angulaire de la périphérie interne de l'amortisseur 83. Les plots 89 sont espacés angulairement entre eux de manière régulière. Dans un exemple de réalisation, les plots 89 présentent une hauteur de l'ordre de 6mm et leur taux de compression est compris entre 11 et 53 pourcents.

En outre, un système de guidage 98 bien visible sur la figure 4b, assure le guidage d'un fil 99 reliant une sonde de température (non représentée) implantée sur le stator 11 à un connecteur 101 déporté de la sonde. Plus précisément, la sonde, de préférence de type CTN (à coefficient de température négatif), est reliée via le connecteur 101 à l'étage de commande (non représenté) apte à réguler l'alimentation des bobines du stator 11 en fonction de l'état thermique de la machine.

Le système de guidage 98 permet d'éviter un contact entre le fil 99 de la sonde et les pièces de fonderie de la machine, en particulier celles du boîtier 70 afin d'éviter l'usure du fil par vibrations et/ou frottements par exemple lors de l'utilisation de la machine. Le système de guidage 98 est en l'occurrence issu d'une périphérie externe de l'amortisseur 83 et vient de matière avec ledit amortisseur 83 pour former une pièce d'un seul tenant.

Le système de guidage 98 comporte une première portion 104 de guidage apte à assurer un guidage du fil 99 autour de l'interconnecteur 22. A cet effet, la première portion 104 s'étend le long de la périphérie externe de l'amortisseur 83. Le système de guidage 98 comporte également une deuxième portion de guidage 105 située dans le prolongement de la première portion de guidage 104 apte à assurer un guidage du fil 99 depuis l'interconnecteur 22 jusqu'au connecteur déporté 101 fixé sur une paroi du boîtier 70. Les deux portions de guidage 104, 105 comportent à cet effet chacune une gorge 107, 108 munie de rétrécissements de section locaux 110 permettant de maintenir le fil 99 en position par pincement à l'intérieur de la gorge 107, 108.

Le système de guidage 98 comporte en outre de préférence une portion 111 contenant une réserve de fil pour la réalisation d'un nouveau câblage en cas de défaut de la sonde. Cette portion 111 est par exemple définie par un détour en forme de U de la gorge 108 afin de rallonger le chemin du fil 99 entre l'interconnecteur 22 et le connecteur déporté 101. La portion 111 de réserve de fil est ménagée dans la deuxième portion de guidage 108 qui s'étend dans une zone dégagée du boîtier 70.

De préférence, l'amortisseur 83 comporte un dispositif d'indexage 113 visible à la figure 4a permettant d'ajuster le positionnement angulaire de l'amortisseur 83 et du système de guidage 98 par rapport à l'interconnecteur 22 lors du montage. Ce dispositif d'indexage 113 est par exemple formé par un logement ménagé à une périphérie externe du corps 84 destiné à coopérer avec un pion de forme complémentaire appartenant à l'interconnecteur 22, ou inversement.

L'amortisseur 83 et le système de guidage 98 sont réalisés dans un matériau électriquement isolant, déformable pour absorber les chocs, et moulable pour obtenir aisément les formes précitées. Ce matériau pourra être par exemple un élastomère fluorocarboné.

Alternativement, dans le mode de réalisation des figures 6a et 7a, la machine comporte une pluralité d'amortisseurs 83 fixés par encliquetage sur la face externe de l'interconnecteur 22. A cet effet, chaque amortisseur 83 comporte une protubérance 118 en forme de queue d'aronde coopérant avec un logement 119 ménagé dans la face externe de l'interconnecteur 22 de forme complémentaire. Les plots 83 présentent ici une largeur inférieure à celle de l'interconnecteur 22.

En l'occurrence, quatre zones angulaires de l'interconnecteur devant être équipées d'amortisseurs, on utilise deux amortisseurs 83 par zones, ce qui nécessite la mise en place de huit amortisseurs 83 au total. Bien entendu, le nombre d'amortisseurs 83 utilisés pourra varier d'une application à l'autre. Les surfaces de contact entre les amortisseurs 83 et les nervures 91 les plus saillantes sont référencées Zc sur la figure 7a.

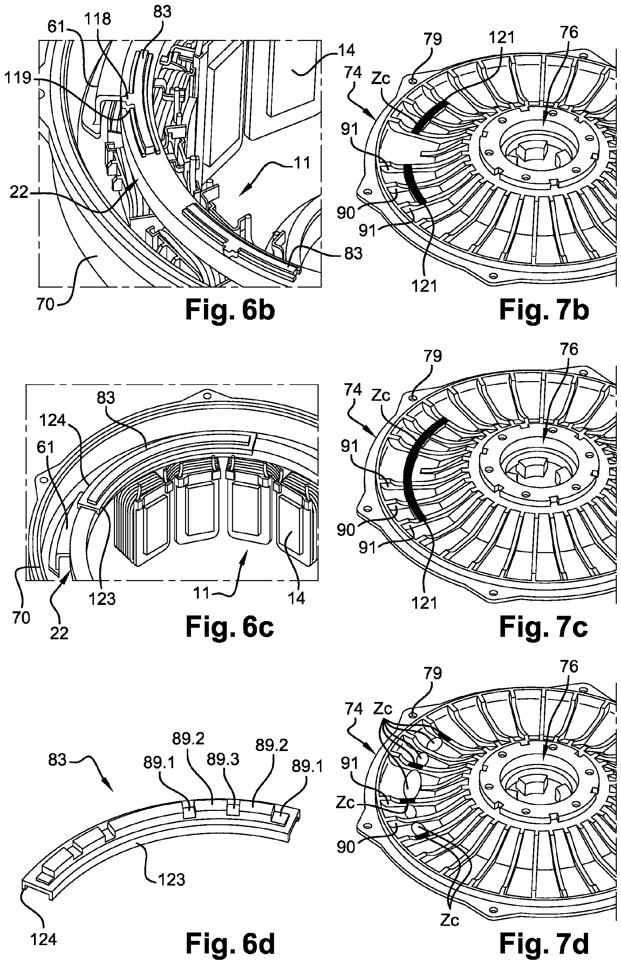

Dans le mode de réalisation des figures 6b et 7b, le flasque de fermeture 74 comporte en outre des zones d'appui 121 visant à augmenter la surface de contact Zc entre les amortisseurs 83 et le flasque de fermeture 74. A cet effet, ces zones d'appui 121, qui comblent les espaces entre les nervures 90, 91, s'étendent angulairement sur une portion de circonférence du flasque 74 correspondant à celle sur laquelle s'étendent les amortisseurs 83. Ces zones d'appui 121 présentent en outre une largeur au moins égale à celle des amortisseurs 83.

Dans le mode de réalisation des figures 6c et 7c, chaque amortisseur 83 s'étend circonférentiellement entre deux pieds d'appui 61 successifs de l'interconnecteur 22, ce qui réduit à quatre le nombre d'amortisseurs 83 utilisés. Chaque amortisseur 83 ayant une largeur correspondant à celle de l'interconnecteur 22 comporte des rebords 123, 124 s'étendant axialement respectivement suivant les périphéries interne et externe du corps 84. Ces rebords 123, 124 destinés à être plaqués contre les faces annulaires d'orientation axiale de la périphérie interne et externe de l'interconnecteur 22 permettent d'assurer un maintien radial de l'amortisseur 83 par rapport à l'interconnecteur 22. Le flasque de fermeture 74 comporte également de zones d'appui 121 pour augmenter la surface de contact Zc entre les amortisseurs 83 et le flasque de fermeture 74. La longueur circonférentielle des zones d'appui 121 est en l'occurrence plus grande que celle des zones appui de la figure 7b compte tenu de l'encombrement circonférentiel plus important des amortisseurs 83.

Dans le mode de réalisation des figures 6d et 7d, chaque amortisseur 83 comporte des plots 89.1-89.3 de différents niveaux de manière à pouvoir venir en appui contre les nervures 90, 91 et aussi contre les zones du fond de l'amortisseur séparant les nervures 90, 91. L'ensemble des zones de contact Zc entre l'amortisseur et le flasque 74 de fermeture sont montrées sur la figure 7d.

En l'occurrence, les plots 89.1-89.3 présentent trois niveaux différents par rapport à la face externe de l'amortisseur 83, en sorte que les plots 89.1 de plus petite hauteur viennent en appui contre les nervures 91 les plus saillantes, les plots 89.2 de plus grande hauteur ayant la plus grande longueur circonférentielle sont destinés à venir en appui contre le fond du flasque 74 entre deux nervures 90, 91 successives, et les plots 89.3 de hauteur intermédiaire viennent en appui contre les nervures 90 du flasque les moins saillantes.

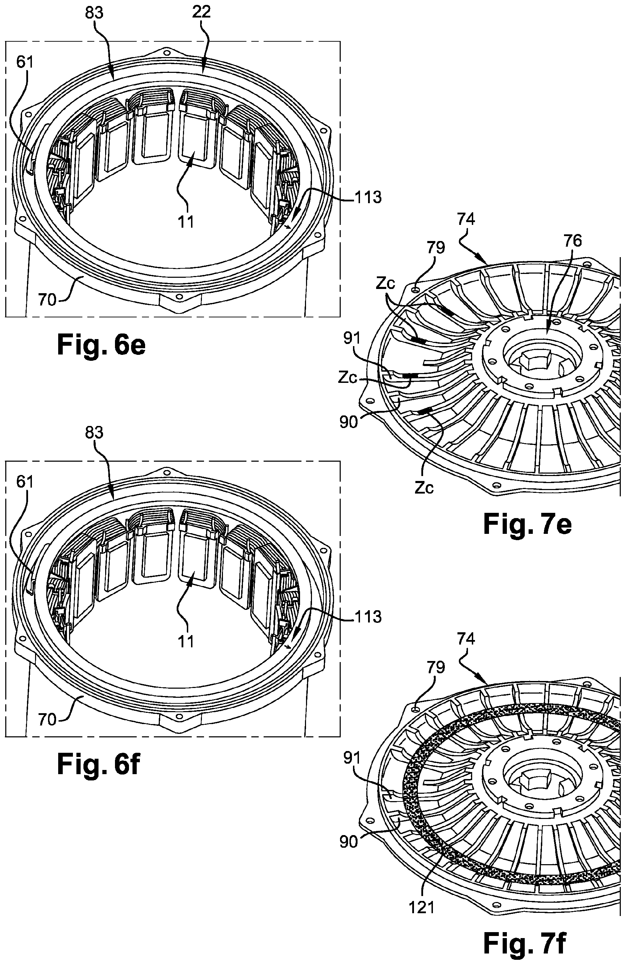

Dans le mode de réalisation des figures 6e et 7e, l'amortisseur 83 prend la forme d'un anneau plein semblable à celui des figures 4 et 5 mais dépourvu de plots 89. Cet amortisseur 83 est destiné à venir en appui contre les nervures 91 suivant les surfaces de contact Zc.

Pour augmenter la surface de contact entre l'amortisseur 83 et le flasque 74, le flasque de fermeture 74 pourra également comporter une zone d'appui 121 de forme annulaire correspondante comblant les espaces de séparation entre les nervures 90, 91 et contre laquelle l'amortisseur 83 est destiné à venir en appui. Ce mode de réalisation est représenté sur les figures 6f et 7f.

On note que le fait d'utiliser une série de plots 89 venant en appui uniquement contre les nervures 90 ou 91 permet d'économiser de la matière par rapport à la réalisation d'un anneau plein.

Le niveau de compression du ou des amortisseurs 83 pourra dépendre de l'état d'usinage du flasque de fermeture 74. Ainsi, il existe un premier niveau de compression contre les nervures 90, 91 et le fond du flasque 74 non usinés et un deuxième niveau de compression de l'amortisseur contre les nervures 90, 91 et le fond du flasque 74 usinés. Le premier niveau de compression est par exemple compris entre 16 et 53 pourcents et le deuxième niveau de compression est par exemple compris entre 16 et 45 pourcents.

Le rotor de la machine électrique pourra être un rotor à griffes comme dans le document FR2890798. En variante, le rotor pourra être à pôles saillants. En variante, le rotor pourra être un rotor à aimants permanents comme dans les documents EP0803962 et EP0831580 précités. En variante, le rotor à griffes ou à pôles saillants pourra comporter également des aimants permanents. En variante, les dents 14 pourront ne pas être réparties circonférentiellement de manière régulière.

L'homme du métier pourra bien entendu modifier la configuration de l'interconnecteur 22 précédemment décrit sans sortir du cadre de l'invention. Ainsi notamment, le stator 11 pourra présenter en variante un bobinage quadriphasé, pentaphasé, voire même hexaphasé. Dans ce cas, l'interconnecteur 22 comporte respectivement 5, 6, 7 cadres empilés les uns sur les autres, le cadre externe constituant le point neutre.

La machine électrique tournante pourra appartenir à un véhicule automobile et être de manière précitée un alternateur, un alterno-démarreur qui est un alternateur réversible, un moteur électrique ou un ralentisseur électromagnétique.

Dans le cadre d'un alternateur appartenant à un prolongateur d'autonomie d'un véhicule électrique (Range-extender en Anglais) le rotor pourra être un rotor à aimants permanents avec plusieurs aimants par logement soumis à l'action d'un ressort comme décrit dans la demande FR12/54733 déposée le 24/05/2012. On appréciera que ce type de machine est compact axialement tout en étant d'une grande puissance.

## Revendications

1. Machine électrique tournante comportant un stator (11) muni de dents (14) autour desquelles sont enroulées un ensemble de bobines (19), un interconnecteur (22) annulaire en appui sur un paquet de tôles du stator (11) muni de languettes (36) auxquelles sont soudées des extrémités (191, 192) des bobines (19) pour formation de phases (U, V, W) de la machine électrique, un flasque de fermeture (74) d'un boîtier (70) contenant le stator (11), et au moins un amortisseur (83) réalisé dans un matériau déformable **caractérisée en ce que** ledit amortisseur est destiné à être monté compressé entre l'interconnecteur (22) et le flasque de fermeture (74) de la machine.

2. Machine selon la revendication 1, **caractérisée en ce que** l'amortisseur (83) de forme annulaire s'étend sur toute une circonférence de l'interconnecteur (22).

3. Machine selon la revendication 1, **caractérisée en ce qu'**elle comporte une pluralité d'amortisseurs (83) s'étendant chacun sur une portion d'une circonférence de l'interconnecteur (22).

4. Machine selon la revendication 3, **caractérisée en ce que** chaque amortisseur (83) s'étend circonférentiellement entre deux pieds d'appui (61) de l'interconnecteur (22).

5. Machine selon l'une des revendications 1 à 4, **caractérisée en ce que** l'amortisseur (83) est configuré pour venir en appui contre des nervures radiales (90, 91) ménagées dans le flasque de fermeture (74).

6. Machine selon la revendication 5, **caractérisée en ce que** le flasque de fermeture (74) comportant une alternance de nervures de faible épaisseur (90) et de grande épaisseur (91), l'amortisseur (83) comporte des plots (89) destinés à venir en appui contre les nervures (91) de grande épaisseur.

7. Machine selon la revendication 5 ou 6, **caractérisée en ce que** l'amortisseur (83) comporte en outre des plots (89) destinés à venir en appui contre un fond du flasque de fermeture (74) s'étendant entre les nervures.

8. Machine selon l'une des revendications 5 à 7, **caractérisée en ce que** le flasque de fermeture (74) comporte en outre au moins une zone d'appui (121) comblant des espaces de séparation entre des nervures du flasque de fermeture (74).

9. Machine selon l'une des revendications 1 à 8, **caractérisée en ce que** l'amortisseur (83) est configuré pour que son niveau de compression dépende d'un état d'usinage du flasque de fermeture (74).

10. Machine selon l'une des revendications 1 à 9, **caractérisée en ce que** l'amortisseur (83) comporte au moins un rebord latéral (86, 123, 124) s'étendant axialement sur au moins une portion d'une périphérie interne et/ou externe dudit amortisseur (83) apte à assurer un maintien radial dudit amortisseur (83) par rapport à l'interconnecteur (22).

11. Machine selon l'une des revendications 1 à 10, **caractérisée en ce que** l'amortisseur (83) comporte des moyens de maintien (118, 119) par encliquetage sur l'interconnecteur (22).

12. Machine selon l'une des revendications 1 à 11, **caractérisée en ce que** l'amortisseur (83) comporte un dispositif d'indexage angulaire (113) dudit amortisseur par rapport à l'interconnecteur (22).

13. Machine selon l'une des revendications 1 à 12, **caractérisée en ce que** l'amortisseur (22) intègre un système de guidage (98) apte à assurer un guidage d'un fil (99) reliant une sonde de température implantée sur le stator (11) à un connecteur (101) déporté de la sonde.

14. Amortisseur (84) réalisé dans un matériau déformable configuré pour être monté compressé entre un interconnecteur (22) et un flasque de fermeture (74) d'une machine électrique tournante selon l'une des revendications précédentes.

15. Amortisseur selon la revendication 14, **caractérisé en ce qu'**il présente une forme annulaire et comporte des plots (89) espacés angulairement entre eux de manière régulière destinés à venir en appui contre des nervures radiales (90, 91) ménagées dans le flasque de fermeture (74).

## Patentansprüche

1. Drehende elektrische Maschine, die einen Stator (11), der mit Zähnen (14) versehen ist, um die herum eine Einheit von Spulen (19) gewickelt ist, einen ringförmigen Verbinder (22) in Auflage auf einem Blechpaket des Stators (11), der mit Zungen (36) versehen ist, an die Enden (191, 192) der Spulen (19) zur Bildung von Phasen (U, V, W) der elektrischen Maschine geschweißt sind, einen Verschlussflansch (74) eines den Stator (11) enthaltenden Gehäuses (70) und mindestens einen aus einem verformbaren Material hergestellten Dämpfer (83) aufweist, **dadurch gekennzeichnet, dass** der Dämpfer dazu bestimmt ist, komprimiert zwischen den Verbinder (22) und den Verschlussflansch (74) der Maschine montiert zu werden.

2. Maschine nach Anspruch 1, **dadurch gekennzeichnet, dass** der ringförmige Dämpfer (83) sich über einen ganzen Umfang des Verbinders (22) erstreckt.

3. Maschine nach Anspruch 1, **dadurch gekennzeichnet, dass** sie eine Vielzahl von Dämpfern (83) aufweist, die sich je über einen Abschnitt eines Umfangs des Verbinders (22) erstrecken.

4. Maschine nach Anspruch 3, **dadurch gekennzeichnet, dass** jeder Dämpfer (83) sich in Umfangsrichtung zwischen zwei Stützfüßen (61) des Verbinders (22) erstreckt.

5. Maschine nach einem der Ansprüche 1 bis 4, **dadurch gekennzeichnet, dass** der Dämpfer (83) konfiguriert ist, gegen im Verschlussflansch (74) angeordnete radiale Rippen (90, 91) in Auflage zu kommen.

6. Maschine nach Anspruch 5, **dadurch gekennzeichnet, dass**, da der Verschlussflansch (74) eine Wechselfolge von Rippen geringer Dicke (90) und großer Dicke (91) aufweist, der Dämpfer (83) Blöcke (89) aufweist, die dazu bestimmt sind, gegen die Rippen (91) großer Dicke in Auflage zu kommen.

7. Maschine nach Anspruch 5 oder 6, **dadurch gekennzeichnet, dass** der Dämpfer (83) außerdem Blöcke (89) aufweist, die dazu bestimmt sind, gegen einen Boden des Verschlussflanschs (74) in Auflage zu kommen, der sich zwischen den Rippen erstreckt.

8. Maschine nach einem der Ansprüche 5 bis 7, **dadurch gekennzeichnet, dass** der Verschlussflansch (74) außerdem mindestens eine Auflagezone (121) aufweist, die Trennräume zwischen den Rippen des Verschlussflanschs (74) ausfüllt.

9. Maschine nach einem der Ansprüche 1 bis 8, **dadurch gekennzeichnet, dass** der Dämpfer (83) konfiguriert ist, damit sein Kompressionspegel von einem Bearbeitungszustand des Verschlussflanschs (74) abhängt.

10. Maschine nach einem der Ansprüche 1 bis 9, **dadurch gekennzeichnet, dass** der Dämpfer (83) mindestens eine seitliche Randleiste (86, 123, 124) aufweist, die sich axial über mindestens einen Abschnitt eines inneren und/oder äußeren Umfangs des Dämpfers (83) erstreckt, die einen radialen Halt des Dämpfers (83) bezüglich des Verbinders (22) gewährleisten kann.

11. Maschine nach einem der Ansprüche 1 bis 10, **dadurch gekennzeichnet, dass** der Dämpfer (83) Halteeinrichtungen (118, 119) durch Einklinken auf dem Verbinder (22) aufweist.

12. Maschine nach einem der Ansprüche 1 bis 11, **dadurch gekennzeichnet, dass** der Dämpfer (83) eine Winkelindexierungseinrichtung (113) des Dämpfers bezüglich des Verbinders (22) aufweist.

13. Maschine nach einem der Ansprüche 1 bis 12, **dadurch gekennzeichnet, dass** der Dämpfer (22) ein Führungssystem (98) umfasst, das eine Führung eines Drahts (99) gewährleisten kann, der eine in den Stator (11) eingesetzte Temperatursonde mit einem zur Sonde versetzten Verbinder (101) verbindet.

14. Dämpfer (84) aus einem verformbaren Material, der konfiguriert ist, komprimiert zwischen einen Verbinder (22) und einen Verschlussflansch (74) einer drehenden elektrischen Maschine nach einem der vorhergehenden Ansprüche montiert zu werden.

15. Dämpfer nach Anspruch 14, **dadurch gekennzeichnet, dass** er eine Ringform hat und gleichmäßig winkelmäßig zueinander beabstandete Blöcke (89) aufweist, die dazu bestimmt sind, gegen im Verschlussflansch (74) angeordnete radiale Rippen (90, 91) in Auflage zu kommen.

## Claims

1. Rotating electrical machine comprising a stator (11) provided with teeth (14) around which are wound a set of coils (19), an annular interconnector (22) bearing on a bundle of plates of the stator (11) provided with tongues (36) to which are welded ends (191, 192) of the coils (19) to form phases (U, V, W) of the electrical machine, a closing flange (74) of a casing (70) containing the stator (11), and at least one damper (83) produced in a deformable material, **characterized in that** said damper is intended to be mounted compressed between the interconnector (22) and the closing flange (74) of the machine.

2. Machine according to Claim 1, **characterized in that** the damper (83) of annular form extends over all of a circumference of the interconnector (22).

3. Machine according to Claim 1, **characterized in that** it comprises a plurality of dampers (83) each extending over a portion of a circumference of the interconnector (22).

4. Machine according to Claim 3, **characterized in that** each damper (83) extends circumferentially between two bearing feet (61) of the interconnector (22).

5. Machine according to one of Claims 1 to 4, **characterized in that** the damper (83) is configured to come to bear against radial ribs (90, 91) formed in the closing flange (74).

6. Machine according to Claim 5, **characterized in that**, the closing flange (74) comprising an alternation of ribs of small thickness (90) and of great thickness (91), the damper (83) comprises blocks (89) intended to come to bear against the ribs (91) of great thickness.

7. Machine according to Claim 5 or 6, **characterized in that** the damper (83) further comprises blocks (89) intended to come to bear against a bottom of the closing flange (74) extending between the ribs.

8. Machine according to one of Claims 5 to 7, **characterized in that** the closing flange (74) further comprises at least one bearing zone (121) filling the spaces of separation between ribs of the closing flange (74).

9. Machine according to one of Claims 1 to 8, **characterized in that** the damper (83) is configured for its compression level to depend on a state of machining of the closing flange (74).

10. Machine according to one of Claims 1 to 9, **characterized in that** the damper (83) comprises at least a lateral rim (86, 123, 124) extending axially over at least a portion of an inner and/or outer periphery of said damper (83) capable of ensuring a radial hold of said damper (83) relative to the interconnector (22).

11. Machine according to one of Claims 1 to 10, **characterized in that** the damper (83) comprises snap-fitting holding means (118, 119) on the interconnector (22).

12. Machine according to one of Claims 1 to 11, **characterized in that** the damper (83) comprises an angular indexing device (113) for indexing said damper relative to the interconnector (22).

13. Machine according to one of Claims 1 to 12, **characterized in that** the damper (22) incorporates a guiding system (98) capable of ensuring a guiding of a wire (99) linking a temperature probe located on the stator (11) to a connector (101) remote from the probe.

14. Damper (84) produced in a deformable material configured to be mounted compressed between an interconnector (22) and a closing flange (74) of a rotating electrical machine according to one of the preceding claims.

15. Damper according to Claim 14, **characterized in that** it has an annular form and comprises blocks (89) regularly spaced apart angularly from one another intended to come to bear against radial ribs (90, 91) formed in the closing flange (74).
